# EUROPEAN PATENT SPECIFICATION

(11) **EP 1 457 389 B1**
(45) Date of publication and mention of the grant of the patent: **19.04.2006**
(21) Application number: 03005380.5
(22) Date of filing: 13.03.2003
(51) Int. Cl.: B60R 16/02, H02J 7/14, H05K 9/00

(54) **A battery arrangement**
Batterieanordnung
Agencement de batterie

(43) Date of publication of application: 15.09.2004
(73) Proprietor: Ford Global Technologies, LLC, Dearborn, MI 48126 (US)
(72) Inventor: Österlund, Kjell, 423 43 Torslanda (SE)
(74) Representative: Spitmann, Knut Hermann

(56) References cited:
- EP-A- 1 014 529
- DE-A- 19 636 816
- US-A- 5 986 355
- PATENT ABSTRACTS OF JAPAN vol. 006, no. 264 (E-150), 23 December 1982 (1982-12-23) -& JP 57 159133 A (NISSAN JIDOSHA KK), 1 October 1982 (1982-10-01)

## Description

### TECHNICAL AREA

The present invention relates to an arrangement for reducing electromagnetic fields in a vehicle being arranged with a battery mounted in a first end of said vehicle, the arrangement comprising a first battery cable leading from the second end of said vehicle to a first pole of said battery, and a second pole of said battery being arranged with a second battery cable coupled to ground. The invention also relates to a vehicle comprising such an arrangement.

### BACKGROUND OF THE INVENTION

In the present day situation, the lack of space and the high temperatures in the engine bay have lead to that it is more and more common that the batteries are mounted in the rear of the vehicles, for instance in connection to the trunk or inside the trunk itself in conventional cars. Consequently, a battery cable of considerable length is coupled between the engine bay (where the vehicle's alternator is located) and the battery. An additional second battery cable is coupled between the battery and the body of the vehicle located in the rear of the vehicle, constituting ground potential. Thus, the return current from the battery flows through the body of the vehicle back to the engine area in the front of the vehicle.

It has recently been apparent that this design, where the charge current flowing toward the battery in a relatively long battery cable leads to electromagnetic fields (EMF). For a number of reasons, it is desirable to limit such fields. The electromagnetic fields of most interest in this are "low-frequency" electromagnetic fields, that is those having a frequency range of about 25 to 1000 Hz.

A known solution to help reduce electromagnetic fields is to lead the return current through a new cable back to the engine area where it is coupled to ground, instead of leading the return current through the car body. Since the battery cable and the new cable both lead approximately the same current but in the opposite directions, the resulting electromagnetic field will be nearly zero. However, this design implies that the cable for the return current must have the same dimensions as the existing battery cable, which is generally quite thick. Furthermore, this solution increases the resistance of the circuit which comprises the battery and the engine cranking motor, leading to start problems of the vehicle at low outside temperatures.

The generic document US5986355 relates to an arrangement for reducing magnetic alternating field in a vehicle generated by the current in a battery cable. The magnetic field is reduced by detecting the current by a detecting arrangement, filtering out the ac component and generating a compensating current to flow through a compensating cable being arranged in parallel with the battery cable. It has shown that in order to ensure proper operation of an arrangement costly calibration routines must be followed. It is therefore a desire of the invention disclosed herein to provide an arrangement for reducing magnetic fiels which increase the reliability of the arrangement while allows the arrangement to be installed at low cost.

### SUMMARY OF THE INVENTION

It is therefore an object of the present invention to provide an arrangement for reducing the electromagnetic field (EMF) generated in the above-described known system.

It is also an object of the present invention to provide an arrangement comprising a cable for return current of the battery having a smaller dimension than the existing battery cables, thus saving cost, weight and package space. Still another object is to accomplish an arrangement providing the objects mentioned above but having no starting problems of the vehicle in low outside temperatures.

These objects are achieved in accordance with claim 1 of the present invention by means of the arrangement for reducing electromagnetic fields in a vehicle, where a second battery cable is coupled to ground at the first end of the vehicle, and that an additional cable is coupled to said second pole of said battery and leading to said second end where it is coupled to ground. Thus, the return current of the battery flows in both the second cable and in the additional cable of the battery.

The charge current flowing toward the battery in the first battery cable comprises d.c. (direct cunent) and a.c. (alternating current) parts, and the return current of the battery comprises d.c. and a.c. parts as well. The second battery cable is coupled to ground via a low-pass filter. Preferably, the low-pass filter may be constituted of an inductor.

Since it is the a.c. parts giving rise to the electromagnetic fields is an advantage that the low-pass filter divides the return current of the battery into d.c. parts and a.c. parts, whereof the d.c. parts flow in the body from the battery to an opposite part of the vehicle, and the a.c. parts flow in the additional cable to the opposite part of the vehicle. The opposite part of the vehicle can be a first end of the vehicle, e.g. the rear. However, the opposite part of the vehicle can also be a second end, e.g. the front. Preferably, the inventive arrangement is used when the engine is arranged in the front of the vehicle and the battery is arranged in the rear of the vehicle. Alternatively, the arrangement of the present invention can also be used when the engine is arranged in the rear of the vehicle and the battery is arranged in the front of the vehicle.

By means of the invention, the return current of the battery is lead to ground potential in at least two cables. In this case, the additional cable carries the return current to an electrical generator of said vehicle, e.g. in the form of an alternator. Preferably, the additional cable is arranged close to the first battery cable for at least a substantial portion of the lengths of said additional cable and said first battery cable. In this way, the electromagnetic fields are nearly zero.

Advantageously, the ground is constituted of a body of the vehicle. Further, the first pole is preferably a plus pole and the second pole is preferably a minus pole. Furthermore, the first battery cable is preferably a positive battery cable and that the second battery cable is preferably a negative battery cable.

### BRIEF DESCRIPTION OF THE DRAWINGS

The invention will be described in the following by way of example only and with reference to the embodiments illustrated in the drawing, in which:

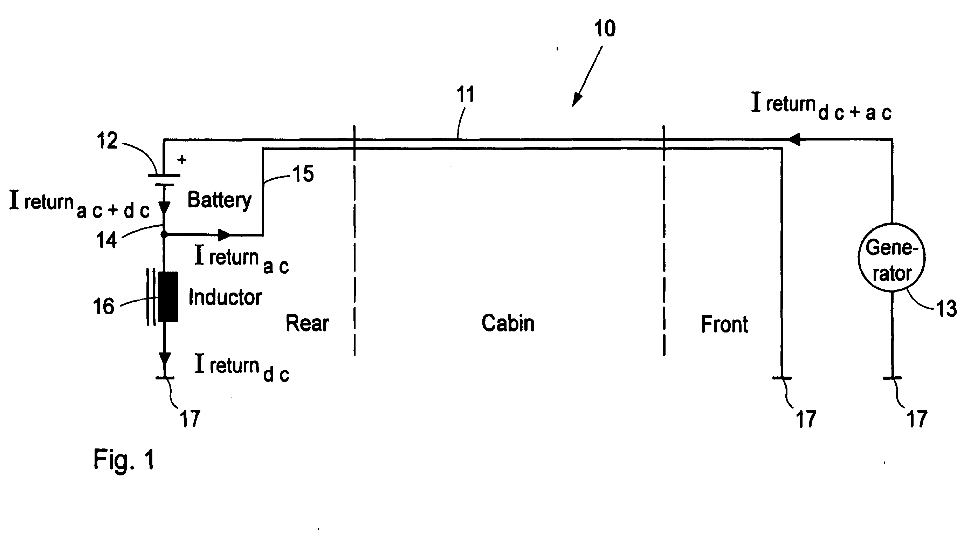

- Fig. 1: is a circuit diagram illustrating a battery circuit provided with the arrangement of the invention.

### DETAILED DESCRIPTION OF PREFERRED EMBODIMENTS

In the drawings, reference numeral 10 generally denotes an arrangement for reducing electromagnetic fields (EMF) in a vehicle being arranged with a battery. The vehicle can be arranged with the battery in the front or in the rear of the vehicle.

In a preferred embodiment of the invention, the vehicle is arranged with a battery 12 in the rear, see Fig.1. The arrangement 10 according the invention then comprises a battery cable 11 leading from the front of the vehicle to a first pole of the battery 12 in the rear. Preferably, the battery cable 11 is a positive battery cable and the first pole is a plus pole. In greater detail, the positive battery cable 11 is generally coupled to a generator in form of an alternator 13 as well as the engine cranking motor, the fuse box and other systems requiring or distributing electrical power, the most of which are located in the engine bay or in other areas in the front of the vehicle. Hereinafter, the term "the front" of the vehicle generally relates to the part of the vehicle being located in front of the cabin, e.g. in the engine bay. Furthermore, the positive battery cable 11 is in its other end coupled to the plus pole of the battery 12. The charge current I_{charge dc+ac} of the engine can flow in the positive battery cable 11 from the alternator 13 to the battery 12.

A second battery cable 14 is coupled to a second pole of the battery 12. Preferably, the second battery cable 14 is a negative battery cable and the second pole is a minus pole. The negative battery cable 14 is in its other end coupled to ground potential 17. In more detail, the ground potential 17 is usually constituted of the body of the vehicle, or a part thereof, being located in the rear of vehicle. Hereinafter, the term "the rear" relates to any of the following parts of the vehicle: in the cabin, in the nearness of the cabin, below the cabin, in the trunk or in connection thereto, or even in other areas located laterally to the trunk in the car. The return current I_{return dc+ac} of the battery 12 can flow from the battery 12 to the ground 17 in the negative battery cable 14.

In the preferred embodiment of the invention, additional cable 15 is coupled to the minus pole of the battery 12 as well. This additional cable 15 leads to the front of the vehicle, wherein the return current of the battery 12 can flow back to the engine bay area. Preferably, the cable for return current 15 is provided close to the positive battery cable 11 for at least a substantial part of the lengths of the cables 11 and 15. For instance, the positive battery cable 11 and the cable for return current 15 can be arranged substantially in contact or even twisted with each other. It is also possible that the cables 11 and 15 are merely located at a relatively small distance in the vicinity of each other. However, according to the invention the cables 11 and 15 are to be so arranged that the resulting electromagnetic fields be substantially zero when currents of the same magnitude flow in opposite directions in the positive battery cable 11 and the cable for return current 15.

For reducing electromagnetic fields in the vehicle, the negative battery cable 14 is coupled to ground via a low-pass filter 16. In the preferred embodiment of the invention, the low-pass filter 16 is thus provided coupled between the negative pole of the battery 12 and its connection to the body of the vehicle. Advantageously, the low-pass filter 16 is constituted of an inductor.

The arrangement 10 operates in the following way during driving of the vehicle. The charge current I_{charge dc+ac} flows in the positive battery cable 11 from the front of the vehicle to the battery 12 located in the rear. The resulting return current I_{return dc+ac} of the battery 12 flows from the battery in direction toward ground potential 17. Then the inductor 16 gives rise to a division of the return current I_{return dc+ac} into d.c. (direct current) parts I_{return dc} and a.c. (alternating current) parts I_{return ac}. Preferably, the d.c. part I_{return dc} flows via the inductor 16 through the body to the front of the vehicle, thus keeping the resistance low for this portion of the return current. Then the a.c. part I_{return ac} flows in the cable 15 for return current to the front of the vehicle. Since the a.c. part I_{return ac} is led through the cable for return current 15 being arranged close to the battery cable 11 instead of through the car body, the electromagnetic fields will be substantially zero or kept at a very low level. Thus, by means of the inventive arrangement, the electromagnetic fields are reduced inside the cabin.

However, it is important that the low-pass filter 16 in form of the inductor withstands the d.c. charge current I_{charge dc} without saturating. For operating as a low-pass filter, the inductor has preferably an inductance in the range of 100 to 400 µH, and the low-pass filter has a cut-off frequency of approximately 25 Hz.

Furthermore, for avoiding losses in the windings of the inductor 16, the number of the winding-turns of the inductor 16 is preferably chosen to be low. As a consequence, the size of the iron core will be bigger than normal in order to minimise the electrical resistance. The number of windings and the size of the iron core should be chosen so that, as mentioned above, the inductor doesn't saturate due to charging current. To reduce the size of the inductor needed to avoid saturation, it is preferable to magnetise the core in opposite direction, using a dc bias secondary winding.

Obviously, it is also possible to apply the arrangement according to the invention in vehicles being arranged with the engine in the rear (e.g. in the trunk), and the battery in the front such as in the engine bay, or in the front part of the cabin. However, in all embodiments of the invention, the positive battery cable 11 and the additional cable 15 are arranged to the opposite part of the vehicle, e.g. from the rear to the front of the vehicle, or in the opposite, from the front to the rear of the vehicle (with regard to the direction of the currents).

In the preferred embodiment of the invention described above, the return current of the battery is led to ground potential in two cables, i.e. in the second battery cable 14 and in the additional cable 15. However, in other embodiments of the invention, the return current can be led to ground potential in two or more cables. Then the separate cables can be arranged with low-pass filters in different arrangements.

## Claims

1. An arrangement (10) for reducing electromagnetic fields in a vehicle being arranged with a battery (12) mounted in a first end of said vehicle, which is the rear of front and of said vehicle, the arrangement (10) comprising a first battery cable (11) leading from a second opposite end of said vehicle to a first pole of said battery (12), a second pole of said battery (12) being arranged with a second battery cable (14) coupled to ground (17), wherein the second battery cable (14) is coupled to ground (17) at the first end of the vehicle, and an additional cable (15) is coupled to said second pole of said battery (12) and leading to said second end where it is coupled to ground (17), **characterised in that** said second batt cable (14) is coupled to ground (17) at the first end of said vehicle via a low-pass filter (16) and that the low-pass filter (16) divides the return current of the battery (12) into direct current parts (d.c) and alternating current (a.c.) parts, whereof the direct current from the battery (12) part flows in the body at the first and of said vehicle to the opposite end of the vehicle, and the alternating current part flows to the opposite end of the vehicle in the additional cable (15).

2. An arrangement as claimed in claim 1,
**characterised in that** the low-pass filter (16) comprises an inductor.

3. An arrangement as claimed in any of claims 1 or 2,
**characterised in that** said additional cable (15) is arranged close to the first battery cable (11) for at least a substantial portion of the length of said first battery cable (11).

4. An arrangement as claimed in any of the preceding claims,
**characterised in that** the first pole is a plus pole and that the second pole is a minus pole.

5. An arrangement as claimed in claim 4,
**characterised in that** the first battery cable (11) is a positive battery cable and that the second battery cable (14) is a negative battery cable.

6. An arrangement as claimed in any of the preceding claims,
**characterised in that** the first end is the rear or of said vehicle and the second end is the front of said vehicle.

7. A vehicle comprising an arrangement (10) for reducing electromagnetic fields according to any of the preceding claims, said arrangement being installed in the vehicle being arranged with a battery (12) in the rear.

## Patentansprüche

1. Anordnung (10) zum Reduzieren elektromagnetischer Felder in einem Fahrzeug, das mit einer Batterie (12) ausgestattet ist, die in einem ersten Ende des Fahrzeugs befestigt ist, das das hintere oder vordere Ende des Fahrzeugs ist, wobei die Anordnung (10) ein erstes Batteriekabel (11) umfaßt, das von dem zweiten gegenüberliegenden Ende des Fahrzeugs zu einem ersten Pol der Batterie (12) führt, wobei ein zweiter Pol der Batterie (12) mit einem zweiten, an Masse (17) gekoppelten Batteriekabel (14) ausgestattet ist, wobei das zweite Batteriekabel (14) an dem ersten Ende des Fahrzeugs an Masse (17) gekoppelt ist und ein zusätzliches Kabel (15) an den zweiten Pol der Batterie (12) gekoppelt ist und zu dem zweiten Ende führt, wo es an Masse (17) gekoppelt ist,
**dadurch gekennzeichnet, daß** das zweite Batteriekabel (14) an dem ersten Ende des Fahrzeugs über ein Tiefpaßfilter (16) an Masse (17) gekoppelt ist und daß das Tiefpaßfilter (16) den Rückstrom der Batterie (12) in Gleichstromkomponenten (DC) und Wechselstromkomponenten (AC) unterteilt, von denen die Gleichstromkomponente von der Batterie (12) aus in dem Körper am ersten Ende des Fahrzeugs zu dem gegenüberliegenden Ende des Fahrzeugs fließt und die Wechselstromkomponente zu dem gegenüberliegenden Ende des Fahrzeugs in dem zusätzlichen Kabel (15) fließt.

2. Anordnung nach Anspruch 1,
**dadurch gekennzeichnet, daß** das Tiefpaßfilter (16) eine Induktionsspule umfaßt.

3. Anordnung nach einem der Ansprüche 1 oder 2,
**dadurch gekennzeichnet, daß** das zusätzliche Kabel (15) über zumindest einen wesentlichen Abschnitt der Länge des ersten Batteriekabels (11) in der Nähe des ersten Batteriekabels (11) angeordnet ist.

4. Anordnung nach einem der vorhergehenden Ansprüche,
**dadurch gekennzeichnet, daß** der erste Pol ein Pluspol ist und daß der zweite Pol ein Minuspol ist.

5. Anordnung nach Anspruch 4,
**dadurch gekennzeichnet, daß** das erste Batteriekabel (11) ein positives Batteriekabel ist und daß das zweite Batteriekabel (14) ein negatives Batteriekabel ist.

6. Anordnung nach einem der vorhergehenden Ansprüche,
**dadurch gekennzeichnet, daß** das erste Ende das Heck des Fahrzeugs ist und das zweite Ende die Front des Fahrzeugs ist.

7. Fahrzeug, das eine Anordnung (10) umfaßt zum Reduzieren elektromagnetischer Felder nach einem der vorhergehenden Ansprüche, wobei die Anordnung in dem Fahrzeug installiert ist, das mit einer Batterie (12) im Heck ausgestattet ist.

## Revendications

1. Agencement (10) pour réduire les champs électromagnétiques dans un véhicule équipé d'une batterie (12) montée dans une première extrémité dudit véhicule, laquelle est l'extrémité arrière ou avant dudit véhicule, l'agencement (10) comprenant un premier câble de batterie (11) menant d'une deuxième extrémité opposée dudit véhicule à un premier pôle de ladite batterie (12), un deuxième pôle de ladite batterie (12) étant équipé d'un deuxième câble de batterie (14) relié à la masse (17),
dans lequel le deuxième câble de batterie (14) est relié à la masse (17) au niveau de la première extrémité du véhicule, et un câble supplémentaire (15) est relié audit deuxième pôle de ladite batterie (12) et mène à ladite deuxième extrémité où il est relié à la masse (17),
**caractérisé en ce que** ledit deuxième câble de batterie (14) est relié à la masse (17) au niveau de la première extrémité dudit véhicule par l'intermédiaire d'un filtre passe-bas (16), et **en ce que** le filtre passe-bas (16) divise le courant de retour de la batterie (12) en des parties de courant continu (c.c.) et des parties de courant alternatif (c.a.), en vertu de quoi la partie de courant continu circule depuis la batterie (12) dans la carrosserie au niveau de la première extrémité dudit véhicule jusqu'à l'extrémité opposée du véhicule, et la partie de courant alternatif circule jusqu'à la partie opposée du véhicule dans le câble supplémentaire (15).

2. Agencement selon la revendication 1,
**caractérisé en ce que** le filtre passe-bas (16) comprend une inductance.

3. Agencement selon l'une quelconque des revendications 1 ou 2,
**caractérisé en ce que** ledit câble supplémentaire (15) est agencé à proximité du premier câble de batterie (11) sur au moins un tronçon important de la longueur dudit premier câble de batterie (11).

4. Agencement selon l'une quelconque des revendications précédentes,
**caractérisé en ce que** le premier pôle est un pôle plus et **en ce que** le deuxième pôle est un pôle moins.

5. Agencement selon la revendication 4,
**caractérisé en ce que** le premier câble de batterie (11) est un câble de batterie positif et **en ce que** le deuxième câble de batterie (14) est un câble de batterie négatif.

6. Agencement selon l'une quelconque des revendications précédentes,
**caractérisé en ce que** la première extrémité est l'arrière dudit véhicule et la deuxième extrémité est l'avant dudit véhicule.

7. Véhicule comprenant un agencement (10) pour réduire les champs électromagnétiques selon l'une quelconque des revendications précédentes, ledit agencement étant installé dans le véhicule équipé d'une batterie (12) à l'arrière.
